**Europäisches Patentamt**

**European Patent Office**

**Office européen des brevets**

(19)

(11) Veröffentlichungsnummer : **0 084 636**
**B1**

(12) **EUROPÄISCHE PATENTSCHRIFT**

(45) Veröffentlichungstag der Patentschrift :
25.03.87

(51) Int. Cl.⁴ : **G 03 B 27/73**

(21) Anmeldenummer : 82111331.3

(22) Anmeldetag : 07.12.82

(54) **Verfahren und Gerät zur Bestimmung der Belichtungszeit.**

(30) Priorität : 27.01.82 IT 480582

(43) Veröffentlichungstag der Anmeldung :
03.08.83 Patentblatt 83/31

(45) Bekanntmachung des Hinweises auf die Patenterteilung : 25.03.87 Patentblatt 87/13

(84) Benannte Vertragsstaaten :
CH DE FR GB LI NL

(56) Entgegenhaltungen :
WO-A-81 /012 03
DE-A- 2 825 435
US-A- 3 984 185
US-A- 4 175 856

(73) Patentinhaber : **Durst AG Fabrik Fototechnischer Apparate**
**Gerbergasse 58**
**I-39100 Bozen (IT)**

(72) Erfinder : **Reiterer, Walther**

I-39010 Vilpian Nr. 17 Prov. Bozen (IT)

**Beschreibung**

Die Erfindung betrifft ein Verfahren und ein Gerät zur Bestimmung der Belichtungszeit bei Farbbelichtungen in fotografischen Vergrößerungs- oder Kopiergeräten.

Bei der Herstellung von Farbvergrößerungen oder Farbkopien von einer Bildvorlage mit Hilfe von fotografischen Vergrößerungs- oder Kopiergeräten wird zur Erreichung einer farbrichtigen Wiedergabe des Bildinhaltes häufig eine Anfärbung des Kopierlichtes vorgenommen. Diese Änderung in der Farbzusammensetzung des ursprünglich im wesentlichen weißen Kopierlichtes wird durch Einführen entsprechender Farbfilter in den Kopierstrahlengang erreicht. Dafür werden entweder handelsübliche Filtersätze in genau abgestuften Dichtewerten eingesetzt, wobei die ausgewählten Filter in am Vergrößerungsgerät hierfür vorgesehene Filterfächer eingelegt werden, oder die Beleuchtungseinrichtung besitzt einen sogenannten Farbmischkopf, in dem subtraktive Farbfilter einzeln und unabhängig voneinander stetig in den Strahlengang einführbar sind und entsprechend der Einführtiefe eine größere oder geringere Beeinflussung des Kopierlichtes hervorrufen.

Zur Bestimmung der erforderlichen Belichtungszeit und der notwendigen Farbfilterung des Kopierlichtes werden häufig Lichtmeßgeräte zu Hilfe genommen, mit denen eine zu kopierende Bildvorlage vor dem Kopieren hinsichtlich ihrer Dichte und Farbverteilung ausgemessen wird ; auf diese Weise wird die Anzahl der erforderlichen Probekopien stark herabgesetzt und eine erhebliche Einsparung an Material und Arbeitszeit erreicht.

Fotografische Kopierverfahren beruhen allgemein darauf, dass für alle zu verarbeitenden Bildvorlagen eine konstante Belichtung eingehalten wird. Dies drückt sich in der Beziehung $E = I_E \times t_E = $ konst aus, wonach die Belichtung E als Maß für die Lichtmenge, die auf das Kopiermaterial auftrifft, unabhängig von der Negativdichte konstant bleibt ($I_E = $ Kopierlichtintensität ; $t_E = $ Belichtungszeit, d. h. Einwirkungsdauer der Kopierlichtintensität).

Ausgehend vom genannten Verfahrensprinzip werden Lichtmeßgeräte zur Bestimmung der Belichtungswerte zunächst mit Bezug auf eine ausgewählte Referenzvorlage auf die vorhandene Film-Papierkombination und den verwendeten Entwicklungsprozess kalibriert und die ermittelten Kalibrierwerte in einer dazu vorgesehenen Speichereinrichtung gespeichert. Aus der Abweichung aufgenommener, auf eine zu kopierende Vorlage bezogener Meßwerte von den im Gerät gespeicherten Kalibrierwerten werden sodann die Belichtungszeit und die Filtereinstellung abgeleitet, die in Bezug auf die Referenzvorlage eine gleichbleibende Belichtung ergeben. Dabei wird in der Regel die Belichtungszeit aufgrund der Messung in einer einzigen, einer Farbschicht des Kopiermaterials entsprechenden Farbe ermittelt und der Farbabgleich unter Zugrundelegung gleicher Belichtungszeiten für alle drei Farbschichten durch geeignete Wahl der Filterung in einer oder in beiden der übrigen Grundfarben hergestellt (vgl. US-A-3 984 185). Die Filtereinstellung erfolgt also unter Beibehaltung eines bestimmten, durch die Kalibrierung mit der Referenzvorlage vorgegebenen Verhältnisses der Anteile zweier Grundfarben des Kopierlichtes zum Anteil der dritten Grundfarbe, in Bezug auf welche die Belichtungszeit festgelegt wurde.

Bekanntlich führt diese Vorgangsweise, die darauf hinausläuft, das in der Referenzvorlage vorhandene Farbgleichgewicht durch entsprechende Farbfilterung des Kopierlichtes auch für alle weiteren zu kopierenden Vorlagen herzustellen, jedoch dann zu unbefriedigenden Ergebnissen, wenn die Vorlage beispielsweise eine Farbdominante aufweist oder stark unter- oder überbelichtet ist. Im ersten Fall ergibt sich in der Bildkopie aufgrund des angewandten Meßprinzips ein zur Farbdominante komplementärfarbiger Stich ; ebenso entstehen im Fall stark unter- oder überbelichteter Vorlagen häufig Kopien mit verfälschter Farbwiedergabe. Allgemein muß mit einer von verschiedenen Faktoren abhängigen Häufigkeit von Fällen gerechnet werden, in denen mit dem Lichtmeßgerät ermittelte Belichtungswerte zu einem subjektiv unbefriedigenden Bildergebnis führen. In all diesen Fällen ergibt sich die Notwendigkeit, eine neue Kopie mit veränderter, von der vorher ermittelten abweichender Filtereinstellung oder Belichtungszeit herzustellen.

Sind für eine von einer Vorlage hergestellte Erstkopie zusätzlich Farbkorrekturen notwendig, so wird im allgemeinen aufgrund einer subjektiven Beurteilung des Erstbildes eine Änderung der Filterung in der gewünschten Richtung und im für erforderlich erachteten Ausmaß vorgenommen. Dabei ändert sich infolge der Filterdichte auch die Intensität des Kopierlichtes, sodass, falls die Helligkeit des Erstbildes korrekt ist und keine Änderung erfahren soll, gleichzeitig mit der Filteränderung eine Änderung der Blende oder der Belichtungszeit zu erfolgen hat. Im Unterschied dazu bleibt bei intensitätsgesteuerten Printern die für ein Eichnegativ ermittelte Belichtungszeit beim Kopieren beliebiger Vorlagen konstant.

Die bekannten Lichtmeßgeräte bieten keine einfache und zuverlässige Möglichkeit, die korrekte Belichtungszeit nach einer nachträglich zum Farbabgleich für die Erstkopie vorgenommenen Änderung in der Filterung neu zu bestimmen, da sie die Belichtungszeit entweder aus der Messung in nur einem Farbkanal oder aus der Messung des zusammengesetzten Kopierlichtes allenfalls unter Einschaltung eines Filters zur Einschränkung des erfaßten Spektralbereiches herleiten.

Die verschiedenen Hersteller von fotografischen Farbbelichtungsgeräten haben Tabellen erstellt, aus denen sogenannte Verlängerungsfaktoren in Abhängigkeit der Filterdichten hervorgehen. Wird also zur Behebung eines Farbstiches oder zur Erreichung einer nach subjektivem Empfinden angemessenen Farbwiedergabe ein Farbfilter gegebener Dichte in den Kopierstrahlengang eingeführt bzw. eine am Belichtungsgerät einstellbare Farbdichte geändert, muß die ursprüngliche Belichtungszeit mit dem zugehörigen, aus der Tabelle entnommenen Verlängerungsfaktor multipliziert werden. Sind zur Erreichung der erforderlichen Filterung zwei Filterfarben nötig, müssen zwei Filter in den entsprechenden Farben und der erforderlichen Dichte eingeschaltet, bzw. bei kontinuierlich einstellbarer Filterung zwei Farbdichtewerte geändert werden, wobei die Belichtungszeit mit den Verlängerungsfaktoren beider Filter multipliziert werden muß. Kontinuierlich einstellbare Filter in Farbköpfen sind mit einer kalibrierten Skala versehen, an welcher der einer Filterstellung zugeordnete Filterwert ablesbar ist.

Die beschriebene Vorgangsweise zur Anpassung der Belichtungszeit an unterschiedliche Farbdichten weist eine Reihe von Nachteilen auf. Einmal erfordert die Ermittlung der richtigen Faktoren aus den Tabellen und deren korrekte rechnerische Anwendung eine gewisse Fertigkeit und Konzentration von Seiten der Bedienungsperson und das Aufsuchen der Werte und die Berechnung selbst sind mühsam und zeitaufwendig. Darüber hinaus enthält die Vorgangsweise eine Anzahl von Fehlerquellen und Ungenauigkeitsfaktoren. So sind bereits die von den Herstellern angebotenen Tabellen aufgrund einer beschränkten Langzeitkonstanz der Filtereingenschaften mit einer Ungenauigkeit behaftet. Im Falle von stetig einstellbaren Filtern kommt noch die Ungenauigkeit der Skaleneinteilung und die Schwierigkeit eines genauen Ablesens des eingestellten Wertes hinzu.

Aus der DE-B-2 825 435 ist ein Laborgerät bekannt, das einen Rechner umfaßt, der aufgrund gespeicherter und eingegebener Werte die erforderlichen Rechenoperationen durchführt und die bei verschieden Filterungen zu ändernden Belichtungszeiten errechnet. Die Tabellenwerte (Filterdichte und zugehöriger Verlängerungsfaktor) sind in einem Speicher des Gerätes gespeichert und können über eine Tastatur abgerufen werden.

Das vorgeschlagene Gerät erleichtert zwar das Errechnen der Belichtungszeiten und verkürzt die dazu notwendige Zeit erheblich, da das umständliche Arbeiten mit Tabellen und die manuelle Ausführung der Rechenoperationen entfällt, beseitigt aber im übrigen nicht die Ungenauigkeitsfaktoren und Fehlerquellen. Zu den schon im Zusammenhang mit der Benutzung der erwähnten Tabellen aufgezählten Ungenauigkeiten und möglichen Fehlern kommt noch die Gefahr von Übertragungsfehlern, d. h. von Fehlern, die beim Übertragen abgelesener Filterdichten auf den Rechner infolge falscher Eingabe über die Tastatur entstehen, hinzu.

Aufgabe der Erfindung ist es, ein Verfahren und ein Gerät zur Bestimmung der Belichtungszeit zu erstellen, bei denen das Meßergebnis nicht von der Genauigkeit von angegebenen oder abgelesenen Filterdichtewerten fest zugeordneten Verlängerungsfaktoren abhängt und die durch Einfachheit in der Anwendung sowie durch hohe und gleichbleibende Genauigkeit bei Verwendung unterschiedlicher Filtertypen bzw. Farbkopftypen ausgezeichnet sind.

Die Aufgabe wird durch die in den Ansprüchen 1 und 3 gekennzeichnet Erfindung gelöst.

Dadurch, dass die Intensität des Kopierlichtes selektiv in den drei Grundfarben gemessen wird, wird die tatsächliche Beeinflussung der Lichtstärke durch die Filter erfaßt und der Bestimmung der Belichtungszeit zugrunde gelegt. Eine gegenseitige feste Zuordnung von Verlängerungsfaktoren und Filterdichtewerten und alle damit verbundenen Ungenauigkeitsfaktoren und Fehlerquellen entfallen.

Durch die rechnerische Ermittlung der Belichtungszeiten in Abhängigkeit der aufgenommenen Lichtmeßwerte entfallen von der Bedienungsperson auszuführende Abgleich- oder Einstellhandlungen weitgehend, sodass eine weitere Reduzierung der möglichen Fehlerquellen erreicht wird.

Die Bestimmung der Belichtungszeit durch Bildung eines Mittelwertes aus den in den einzelnen Grundfarben selektiv erfaßten Meßwerten führt zu einer korrekten, von der Filterstellung unabhängigen Bilddichte auch bei Einsatz von Korrekturfiltern unterschiedlicher Dichte in mehr als einer Farbe.

Weitere Merkmale und Vorteile des vorgeschlagenen Verfahrens sowie eines Gerätes zu dessen Anwendung ergeben sich aus den Unteransprüchen im Zusammenhang mit der Beschreibung eines bevorzugten Ausführungsbeispiels, das im folgenden anhand von Zeichnungen eingehend erläutert wird. Dabei zeigen :

Figur 1 eine Gesamtansicht eines Meßgerätes zur Bestimmung der Belichtungszeit nach dem erfindungsgemäßen Verfahren.

Figur 2 ein Blockschaltbild zur Veranschaulichung des Funktionsprinzips des Gerätes.

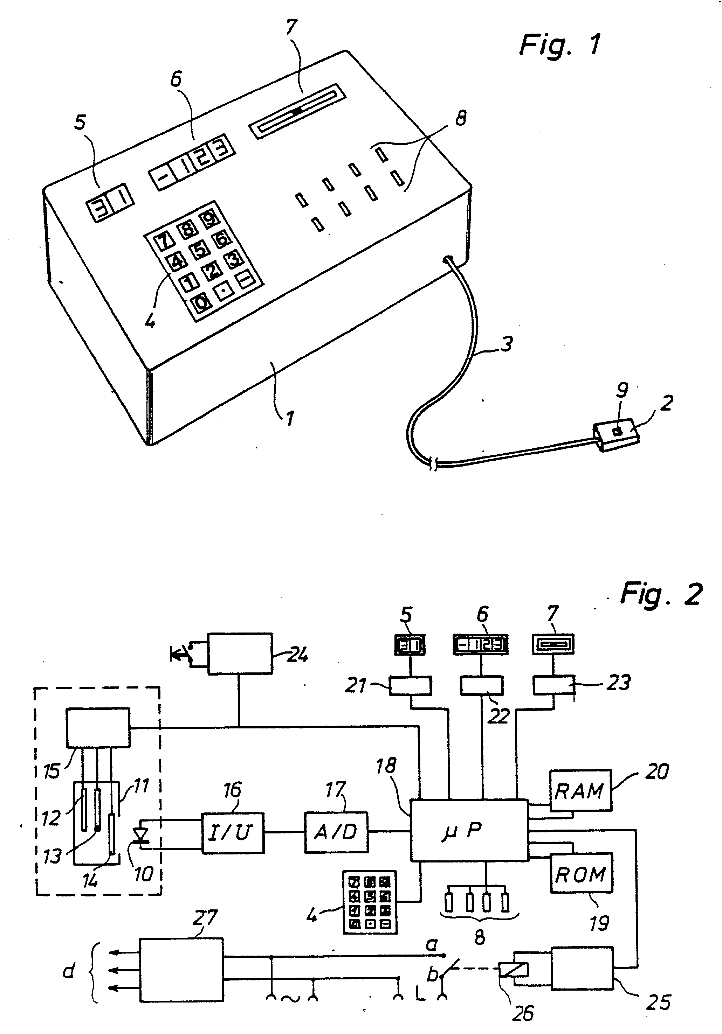

Wie aus Figur 1 ersichtlich ist, besteht das Lichtmeßgerät zur Bestimmung der Belichtungszeit nach dem erfindungsgemäßen Verfahren im wesentlichen aus einem Grundgerät 1 und einer Meßsonde 2, die miteinander über ein elektrisches Kabel 3 in Verbindung stehen. Auf der Oberseite des Gehäuses, das das Grundgerät umschließt, befinden sich in übersichtlicher Anordnung ein numerisches Tastenfeld 4, Leuchtziffernanzeigen 5 und 6, eine Lichtbandanzeige 7 und verschiedene Funktionstasten 8.

Die Bauelemente der Meßsonde 2 sind in einem kompakten Gehäuse untergebracht, dessen Oberseite eine Meßöffnung 9 für den Einfall des Meßlichtes in das Innere des Gehäuses aufweist. Die Sonde hat gegenüber dem Grundgerät nur geringe Abmessungen und ist dank des entsprechend bemessenen Verbindungskabels auch in Abstand vom Grundgerät auf der Bildebene eines Vergrößerungsgerätes frei positionierbar.

In Figur 2 ist das Funktionsprinzip des Lichtmeßgerätes anhand eines Blockschaltbildes veranschaulicht.

Als Meßaufnehmer enthält die Sonde einen fotoelektrischen Wandler 10, vorzugsweise eine Fotodiode, deren lichtempfindliche Fläche hinter der Meßöffnung 9 des Gehäuses angeordnet ist. Eine Filtervorrichtung 11 umfaßt drei vorzugsweise motorisch angetriebene Farbfilter 12, 13, 14 jeweils in den Grundfarben Rot, Grün und Blau, die über eine Steuereinrichtung 15 einzeln in den Lichtweg zwischen Meßöffnung 9 und Fotodiode einführbar sind, sodass durch Einschalten des entsprechenden Farbfilters farbselektive Lichtmessungen vorgenommen werden können.

Der von der Fotodiode abgegebene, der einfallenden Lichtstärke proportionale Strom wird in einem Strom-Spannungswandler 16 in eine Spannung umgesetzt, und diese anschließend in einem Analog-Digitalwandler 17 digitalisiert und zur Weiterverarbeitung einem Digitalrechner zugeführt. Der Rechner umfaßt einen Mikroprozessor 18, einen das Operationsprogramm enthaltenden Lesespeicher 19 und einen weiteren Speicher 20 mit freiem Zugriff (Schreib-Lesespeicher) zur Speicherung von Operationsdaten und Kalibrierwerten. Rechnereingänge sind außer mit dem von der Meßsonde kommenden Signal mit der numerischen Tastatur 4 zur Eingabe von Daten sowie mit einer Reihe von Funktionswähltasten 8 zur Eingabe von Befehlen und Instruktionen an den Rechner verbunden. Rechnerausgänge steuern über Dekodiereinheiten 21, 22 und 23 die Leuchtziffernanzeigen 5 und 6 sowie die Lichtbandanzeige 7, die je nach der gewählten Funktion Speicherwerte, vom Rechner ermittelte Ergebniswerte oder von der Bedienungsperson über die Tastatur eingegebene Zahlenwerte anzeigen. Über die Steuereinrichtung 15 steuert der Rechner weiters die Positionierung der Farbfilter der Meßsonde während eines selbsttätigen Meßablaufes mit farbselektiven Messungen in den drei Grundfarben. Die Farbfilter der Meßsonde sind außerdem über eine Tipptaste 24 manuell betätigbar ; jede Betätigung der Taste bewirkt einen Filterwechsel, sodass bei wiederholter Betätigung der Taste die einzelnen Filter der Reihe nach in ihre Wirkstellung gelangen.

In einer vorteilhaften Ausführung des Meßgerätes steuert ein Rechnerausgang über eine Steuerstufe 25 ein Relais 26, dessen Schaltkontakte a und b elektrisch jeweils mit dem Netz und mit einer von zwei Klemmen einer Anschlußstelle L verbunden sind, deren zweite Klemme ständig an das Netz angeschlossen ist. Auf diese Weise kann der Rechner direkt die Stromversorgung eines Verbrauchers, insbesondere einer an die Anschlußstelle L angeschlossenen Belichtungseinrichtung steuern.

Eine an das Netz angeschlossene Stromversorgungseinrichtung 27 liefert die Speisespannungen für alle elektrischen Baugruppen der Schaltung und ist mit diesen über Leitungen d in Verbindung.

In der zentralen Recheneinheit werden die Belichtungswerte aufgrund aufgenommener Meß- und gespeicherter Kalibrierwerte unter Zugrundelegung der bereits genannten Beziehung $E = I_E \times t_E = $ konst berechnet. In logarithmischer Ausdrucksform wird obige Beziehung zu

$$\log E = \log I_E + \log t_E = \text{konst} = K_D$$

und die neue Konstante $K_D$ erhält die Bedeutung einer Positivdichte in Übereinstimmung mit der sogenannten Schwärzungskurve $D = f(\log E)$, welche die Dichte D als Funktion des Logarithmus der Belichtung E ausdrückt. Die Konstante $K_D$ ist somit ein Maß für die Schwärzung des belichteten Kopiermaterials und kann mit Bezug auf eine Referenzkopie bestimmt werden. Hierfür wird eine als Referenzvorlage gewählte Vorlage zu Hilfe genommen, in Bezug auf welche die Belichtungszeit und die optimale Filterung in einer Probebelichtungsreihe ermittelt worden sind. Wird nun die auf diese Weise festgelegte Belichtungszeit über die Tastatur des Gerätes eingegeben und die Meßsonde in der Kopierebene dem die Referenzvorlage durchleuchtenden Kopierlicht ausgesetzt, so ist der Rechner in der Lage, die Konstante $K_D$ als Summe der logarithmischen Werte der eingegebenen Belichtungszeit und der gemessenen Lichtstärke zu berechnen. Aus der selektiven Lichtmessung in den drei Grundfarben ergeben sich drei Konstanten $K_{DR}$, $K_{DG}$, $K_{DB}$, deren jede einer bestimmten Farbe zugeordnet ist. Die so erhaltene Gruppe von drei Konstanten wird in einem festgelegten Speicherplatz des Speichers 20 gespeichert ; damit ist das Meßgerät auf die verwendete Film-Papierkombination kalibriert. Der Kalibriervorgang wird, nachdem die Meßsonde in die Meßstellung gebracht und die für die Referenzkopie gewählte Belichtungszeit eingegeben worden ist, durch Betätigen einer hierfür bestimmten Taste « CAL » aus der Reihe der Funktionswähltasten 8 ausgelöst und läuft dann selbsttätig in einer festgelegten Meßfolge ab, während der die Farbfilter der Meßsonde der Reihe nach in die Wirkstellung gelangen ; die dabei aufgenommenen, jeweils auf eine Grundfarbe bezogenen Meßwerte liefern in Verbindung mit der eingegebenen Belichtungszeit die Größen für die Berechnung der zu speichernden Konstanten.

Es können auch mehrere, jeweils auf eine bestimmte Film-Papierkombination bezogene Dreiergruppen von Konstanten in gesonderten Speicherplätzen gespeichert werden, wobei jede Film-Papierkombination durch den ihr zugeordneten Speicherplatz identifizierbar ist. Die Anzahl der gleichzeitig speicherbaren Dreiergruppen von Konstanten bzw. die Anzahl der zur Verfügung stehenden Kalibrierkanäle hängt einzig von der Speicherkapazität des verwendeten Speichers ab.

Die Wahl des einer bestimmten Film-Papierkombination zugeordneten Kalibrierkanals erfolgt durch Eingabe der betreffenden Speicherplatznummer über die Tastatur 4 und anschließendes Betätigen einer hierfür vorgesehenen Taste « PROGRAM » aus der Reihe der Funktionswähltasten 8. Die Nummer des gewählten kanales erscheint dabei auf der Leuchtziffernanzeige 5 und der Rechner operiert unter Zugrundelegung der dem kanal eigenen Kalibrierung. Er ist dann in der Lage, für jeden gemessen Wert der Kopierlichtintensität die zugehörige Belichtungszeit zu errechnen ; der errechnete Wert wird an der Leuchtziffernanzeige 6 angezeigt.

4

Wie bereits erwähnt, wird bei der Herstellung von Farbkopien mit Hilfe von Vergrößerungsgeräten eine für alle drei Farbschichten einheitliche Belichtungszeit üblicherweise aufgrund einer Selektivmessung des ungefilterten Kopierlichtes in einer einzigen Grundfarbe bestimmt und die Lichtstärke in den übrigen Farben durch geeignete Filterung so angepaßt, dass sich bei der festgelegten, einheitlichen Belichtungszeit ein korrektes Farbgleichgewicht ergibt.

Weist die mit einer ersten, nach den obigen Kriterien festgelegten Kombination von Belichtungswerten hergestellte Bildkopie hinsichtlich Farbwiedergabe nicht die gewünschte Qualität auf, muß eine Farbkorrektur durch Veränderung der Filterung in wenigstens einer der Grundfarben vorgenommen werden. Zur Bestimmung der neuen Belichtungszeit, die infolge der veränderten Farbdichte an die Stelle der vorher festgelegten zu treten hat, wird ein Meßzyklus durchgeführt, in welchem der Reihe nach die Lichtintensität in den drei Grundfarben gemessen wird ; die Belichtungszeit wird dann durch Bildung eines Mittelwertes aus den in den einzelnen Farben selektiv ermittelten Meßwerten bestimmt. Dieser Vorgang wird nach Positionieren der Meßsonde in die Meßstellung auf der Kopierebene durch Betätigen einer hierfür bestimmten Taste « COLOR CORRECTION » aus der Reihe der Funktionswähltasten 8 ausgelöst und läuft dann mithilfe des Rechners selbsttätig ab, indem dieser die Positionierung der Farbfilter der Meßsonde entsprechend einer festgelegten Folge von Selektivmessungen steuert und die neue Belichtungszeit durch Bildung eines Mittelwertes aus den Meßwerten der einzelnen Selektivmessungen berechnet.

In einer vorteilhaften Weiterbildung des Meßgerätes wird die Belichtungszeit als Mittel der Meßwerte in den dies Grundfarben unter Einführung geeigneter Gewichtungsfaktoren je nach Farbe berechnet.

In einer weiteren vorteilhaften Weiterbildung stellt das Meßgerät einen eigenständigen Farbanalysator dar, der außer der Funktion der Bestimmung der Belichtungszeit auch jene der Bestimmung der Farbfilterung erfüllt.

In der Anwendung des Meßgerätes als Farbanalysator für die Bestimmung der Belichtungszeit und der Farbfilterung nach einem üblichen Verfahren wird die in Meßstellung auf der Kopierebene befindliche Meßsonde auf die Aufnahme beispielsweise des Rotanteiles des Kopierlichtes eingestellt, indem die Tipptaste 24 solange betätigt wird, bis das rote Meßfilter in Wirkstellung ist. Nach anschließender Betätigung einer eigenen Taste « COMPUTE TIME » aus der Reihe der Funktionswähltasten 8 errechnet der Rechner aufgrund der von der Meßsonde erfaßten Lichtintensität die für die Rotschicht erforderliche Belichtungszeit und läßt deren Zahlenwert auf der Leuchtziffernanzeige 6 erscheinen. Wird diese Zeit als für alle drei Farbschichten gemeinsame Belichtungszeit festgehalten, ist der Rechner unter Anwendung des genannten Prinzips der konstanten Belichtung E in der Lage, die für die Blau- und Grünschicht notwendige Kopierlichtintensität zu berechnen. Wird die Meßsonde durch Betätigen der Tipptaste 24 beispielsweise auf den Blaukanal eingestellt, vergleicht der Rechner den aufgenommenen Meßwert mit dem errechneten Sollwert und zeigt eine eventuelle Differenz der beiden Werte auf der Lichtbandanzeige 7 mit mittigem Nullpunkt an. Entsprechend dieser Anzeige wird das subtraktive Gelbfilter der Beleuchtungseinrichtung von der Bedienungsperson so verstellt, dass sich am Lichtband eine Nullanzeige einstellt, was Gleichheit zwischen berechnetem Soll- und gemessenem Ist-Wert bedeutet. In gleicher Weise wird nach Einstellen der Meßsonde auf Empfang des Grünlichtes die Einstellung des Magentafilters an der Beleuchtungseinrichtung vorgenommen. Damit sind die Belichtungswerte Zeit und Filterung festgelegt und die Vorlage kann auf das Kopiermaterial aufbelichtet werden.

**Patentansprüche**

1. Verfahren zur Bestimmung der Belichtungszeit bei Farbbelichtungen in fotografischen Vergrößerungs- oder Kopiergeräten mit einheitlicher Belichtungszeit (t) für die drei Farbschichten des Kopiermaterials, wobei die von den Kopierfiltern und einer zu kopierenden Vorlage ausgehende Kopierlichtintensität selektiv in den Grundfarben (i) Rot, Grün und Blau gemessen wird und eine Kopie gemäß der von einer vorhergehenden Eicheinstellung geforderten Belichtung ($E_i$) hergestellt wird, dadurch gekennzeichnet, dass nach einer Änderung der Kopierfilter für diese Vorlage eine neue Belichtungszeit nach Maßgabe eines die Meßwerte aller drei Grundfarben berücksichtigenden Mittelwertes berechnet wird, um die von der Eicheinstellung geforderte Gesamtbelichtung ($E_D = \Sigma_i E_i$) etwa konstant zu halten.

2. Verfahren nach Anspruch 1, dadurch gekennzeichnet, dass die Meßwerte je nach Farbzugehörigkeit mit unterschiedlichen Gewichtungsfaktoren gewichtet werden.

3. Meßgerät mit wenigstens einem fotoelektrischen Wandler und farbselektiven Meßfiltern zu dessen Sensibilisierung in den Grundfarben Rot, Grün und Blau, zur Anwendung des Verfahrens nach den Ansprüchen 1 und 2, dadurch gekennzeichnet, dass ein A/D Wandler (17), der die vom Wandler (10) ausgehenden Meßsignale digitalisiert, und ein Digitalrechner (18, 19, 20) vorgesehen ist, der einen die Meßsignale aller drei Grundfarben berücksichtigenden Mittelwert und aus diesem einen einheitlichen Wert der neuen Belichtungszeit für die drei Farben berechnet.

4. Meßgerät nach Anspruch 3, dadurch gekennzeichnet, dass der Digitalrechner einen Mikroprozessor (18) und Speichereinrichtungen (19, 20) umfaßt.

5. Meßgerät nach den Ansprüchen 3 und 4, dadurch gekennzeichnet, dass es eine Eingabevorrichtung (4) zur Eingabe von Instruktionen an den Rechner und/oder von Zahlenangaben in die Speichereinrichtungen (19, 20) oder in Teile derselben umfaßt.

6. Meßgerät nach den Ansprüchen 3 bis 5, dadurch gekennzeichnet, dass der Digitalrechner je nach erhaltener Instruktion den Wert der Belichtungszeit in Abhängigkeit der aufgenommenen Lichtintensität oder, bei vorgegebener Belichtungszeit den zugehörigen Soll-Wert der Lichtintensität errechnet.

7. Lichtmeßgerät nach Anspruch 6, dadurch gekennzeichnet, dass der Digitalrechner den errechneten Soll-Wert der Lichtintensität mit dem gemessenen Ist-Wert vergleicht und eine eventuelle Abweichung zwischen den beiden Werten auf einer optischen Anzeigevorrichtung (7) anzeigt.

8. Meßgerät nach Anspruch 7, dadurch gekennzeichnet, dass die Anzeigevorrichtung eine Lichtbandanzeige mit mittigem Nullpunkt ist.

9. Meßgerät nach einem der Ansprüche 3 bis 8, dadurch gekennzeichnet, dass es mit einer Schalteinrichtung zur Schaltung der Stromzufuhr an einen angeschlossenen Verbraucher, insbesondere ein Belichtungsgerät, für die Dauer der errechneten oder eingegebenen Belichtungszeit ausgestattet ist.

## Claims

1. Method for the determination of the exposure time for colour exposures in photographic enlargers or printers having a uniform exposure time (t) for the three coloured layers of the printing material, the printing light intensity issuing from the printing filters and an original to be printed being measured selectively in the primary colours (i) red, green and blue and a print being produced in accordance with the exposure ($E_i$) required by a preceding calibration setting, characterised in that, after changing the printing filters for that original, a new exposure time is calculated in accordance with a mean that takes into account the measured values of all three primary colours, in order to keep the total exposure ($E_D = \Sigma_i E_i$) required by the calibration setting approximately constant.

2. Method according to claim 1, characterised in that the measured values are weighted with different weighting factors according to the colour to which they belong.

3. Measuring apparatus having at least one photoelectric transducer and colour-selective measurement filters for the sensitisation thereof in the primary colours red, green and blue, for the application of the method according to claims 1 and 2, characterised in that there are provided an A/D converter (17), which digitises the measurement signals originating from the transducer (10), and a digital computer (18, 19, 20), which calculates a mean that takes into account the measurement signals of all three primary colours and from this calculates a uniform value of the new exposure time for the three colours.

4. Measuring apparatus according to claim 3, characterised in that the digital computer comprises a microprocessor (18) and storage devices (19, 20).

5. Measuring apparatus according to claims 3 and 4, characterised in that it comprises an input device (4) for entering instructions for the computer and/or figures into the storage devices (19, 20) or into parts thereof.

6. Measuring apparatus according to claims 3 to 5, characterised in that, according to the instruction received, the digital computer calculates the value of the exposure time in dependence on the light intensity recorded or, in the case of a given exposure time, calculates the associated desired value of the light intensity.

7. Light-measuring apparatus according to claim 6, characterised in that the digital computer compares the calculated desired value of the light intensity with the actual value measured and indicates any difference between the two values on an optical display device (7).

8. Measuring apparatus according to claim 7, characterised in that the display device is a light-band display having a central zero point.

9. Measuring apparatus according to any one of claims 3 to 8, characterised in that it is provided with a switching device for switching the power supply to a connected consuming device, especially an exposure device, for the duration of the calculated or entered exposure time.

## Revendications

1. Procédé pour la détermination du temps d'exposition pour l'exposition en couleur dans des appareils d'agrandissement ou de tirage photographique à temps d'exposition unique (t) pour les trois couches chromogènes de la surface sensible de tirage, dans lequel l'intensité de la lumière de tirage émise des filtres de tirage et d'un original à tirer est mesurée sélectivement dans les couleurs fondamentales (i), rouge, vert et bleu et un tirage est produit en fonction de l'exposition ($E_i$) demandée par un étalonnage antérieur, caractérisé en ce que, après une modification des filtres de tirage exécuté pour cet original, on calcule un nouveau temps d'exposition d'après une valeur moyenne qui tient compte des valeurs de mesure des trois couleurs fondamentales, pour maintenir approximativement constante l'exposition totale requise par l'étalonnage ($E_D = \Sigma_i E_i$).

2. Procédé selon la revendication 1, caractérisé en ce que les valeurs de mesure sont pondérées avec des coefficients de pondération qui diffèrent selon la couleur à laquelle ils appartiennent.

3. Appareil de mesure comprenant au moins un transducteur photoélectrique (10) et des filtres de mesure opérant une sélection chromatique et qui sensibilisent ce transducteur dans les couleurs fondamentales rouge, vert et bleu, pour la mise en œuvre du procédé selon les revendications 1 et 2, caractérisé en ce qu'un convertisseur A/D (17) numérise les signaux de mesure émis par le transducteur (10) et il est prévu un ordinateur numérique (18, 19, 20) qui calcule une valeur moyenne qui tient compte des signaux de mesure des trois couleurs fondamentales et, à partir de cette valeur moyenne, une valeur unique du nouveau temps d'exposition pour les trois couleurs.

4. Appareil de mesure selon la revendication 3, caractérisé en ce que l'ordinateur numérique comprend un micro-processeur (18) et des dispositifs de mémoire (19, 20).

5. Appareil de mesure selon les revendications 3 et 4, caractérisé en ce qu'il comprend un dispositif d'introduction (4) destiné à introduire des instructions dans l'ordinateur et/ou des indications numériques dans les dispositifs de mémoire (19, 20) ou dans des parties de ces dispositifs.

6. Appareil de mesure selon les revendications 3 à 5, caractérisé en ce que l'ordinateur numérique calcule, selon l'instruction qu'il a reçue, la valeur du temps d'exposition en fonction de l'intensité lumineuse reçue, ou encore, dans le cas d'un temps d'exposition prédéterminé, la valeur de consigne correspondante de l'intensité lumineuse..

7. Appareil de mesure selon la revendication 6, caractérisé en ce que l'ordinateur numérique compare la valeur de consigne calculée de l'intensité lumineuse à la valeur réelle mesurée et affiche sur un dispositif d'affichage optique (17) un éventuel écart entre les deux valeurs.

8. Appareil de mesure selon la revendication 7, caractérisé en ce que le dispositif d'affichage est un affichage à bande lumineuse à point zéro central.

9. Appareil de mesure selon l'une des revendications 3 à 8, caractérisé en ce qu'il est équipé d'un dispositif de commande servant à commander l'amenée du courant à un utilisateur raccordé, en particulier à un appareil d'exposition, pour la durée du temps d'exposition calculé ou introduit.

Fig. 1

Fig. 2